# EUROPÄISCHE PATENTSCHRIFT

(11) **EP 4 041 568 B1**
(45) Veröffentlichungstag und Bekanntmachung des Hinweises auf die Patenterteilung: **26.02.2025**
(21) Anmeldenummer: 20786455.4
(22) Anmeldetag: 01.10.2020
(51) Int. Cl.: B42D 25/455, B42D 25/46, B42D 25/47, B42D 25/324, B42D 25/351, B42D 25/373, B42D 25/29, B44C 1/17, B29C 48/16, B32B 37/00

(54) **SICHERHEITSELEMENT-TRANSFERMATERIAL, VERFAHREN ZUM HERSTELLEN DESSELBEN UND VERWENDUNG**
SECURITY ELEMENT TRANSFER MATERIAL, METHOD FOR MANUFACTURING SAME AND USE
MATÉRIAU DE TRANSFERT D'ÉLÉMENT DE SÉCURITÉ, SON PROCÉDÉ DE FABRICATION ET UTILISATION

(30) Priorität: 08.10.2019 DE 102019006977
(43) Veröffentlichungstag der Anmeldung: 17.08.2022
(73) Patentinhaber: Giesecke+Devrient Currency Technology GmbH, 81677 München (DE)
(72) Erfinder: SCHINABECK, Josef, 82467 Garmisch-Partenkirchen (DE); TEUFEL, Björn, 83700 Weißach (DE); HOFFMÜLLER, Winfried, 83646 Bad Tölz (DE)
(74) Vertreter: Giesecke+Devrient IP
(86) Internationale Anmeldenummer: PCT/EP2020/025442
(87) Internationale Veröffentlichungsnummer: WO 2021/069096

(56) Entgegenhaltungen:
- EP-A1- 3 342 602
- WO-A1-2010/031543
- WO-A1-2017/102744
- WO-A2-2005/108108
- US-B2- 10 391 807

## Beschreibung

Die Erfindung betrifft ein Sicherheitselement-Transfermaterial mit einem auf einem temporären Träger angeordneten, vom temporären Träger ablösbaren Sicherheitselement-Schichtverbund, der über eine Klebschicht auf einen zur Erhöhung der Fälschungssicherheit abzusichernden Wertgegenstand, wie etwa ein Wertdokument, aufgebracht werden kann. Die Erfindung betrifft des Weiteren ein Verfahren zum Herstellen des Sicherheitselement-Transfermaterials sowie eine Verwendung des Sicherheitselement-Transfermaterials zur Absicherung eines Wertgegenstandes, insbesondere ein Wertdokuments.

Wertgegenstände, wie etwa Markenartikel oder Wertdokumente, insbesondere Banknoten, werden oft mit Sicherheitselementen ausgestattet, die eine Überprüfung der Echtheit des Wertgegenstands erlauben und die zugleich als Schutz vor unerlaubter Reproduktion dienen. Häufig werden die dafür verwendeten Sicherheitselemente nicht einzeln, sondern in Form von Transferbändern mit einer Vielzahl von als Transferelement ausgebildeten Sicherheitselementen bereitgestellt. Kennzeichnend für Transferbänder ist, dass die Sicherheitselemente auf einer Trägerschicht vorbereitet werden, wobei die Reihenfolge der Schichten der Transferelemente üblicherweise verglichen mit der später auf dem zu schützenden Gegenstand vorliegenden Schichten-Reihenfolge umgekehrt ist. Die Trägerschicht wird beim Transfer typischerweise von dem Schichtaufbau der Sicherheitselemente abgezogen. Auf der der Trägerschicht entgegengesetzten Seite weisen die Transferbänder eine Klebeschicht auf, meist aus einem Heißsiegelklebstoff bzw. Heißsiegellack, der bei der Übertragung der Sicherheitselemente schmilzt und die Sicherheitselemente mit dem zu sichernden Gegenstand verklebt. Das Transferband wird mit der Heißsiegelklebeschicht auf den Gegenstand aufgelegt und mittels eines beheizten Transferstempels oder einer Transferrolle angepresst und in der Umrissform des erhitzten Transferstempels auf den Gegenstand übertragen. Transferelemente, Transferbänder und die Übertragung von Transferelementen auf Zielsubstrate sind beispielsweise in der EP 0 420 261 B1 und der WO 2005/108108 A2 beschrieben.

Anstelle der Formgebung der Transferelemente durch den Transferstempel beim Übertragungsprozess können die einzelnen Transferelemente auch bereits auf dem Transferband in der gewünschten Umrissform vorgefertigt vorliegen. Die Vorfertigung getrennter Einzel-Sicherheitselemente ist z.B. dann sinnvoll, wenn die Sicherheitselemente einen Schichtaufbau haben, der eine exakte Durchtrennung des gesamten Schichtaufbaus während des Transferprozesses schwierig macht. Dies ist z.B. dann der Fall, wenn der Schichtaufbau des zu übertragenden Sicherheitselements ein permanentes Trägersubstrat, beispielsweise eine Kunststofffolie, enthält. Trägersubstrate innerhalb des Schichtaufbaus von Sicherheitselementen sind zweckmäßig, wenn die Sicherheitselemente besonders stabil ausgebildet werden müssen, beispielsweise wenn sie selbsttragend sein müssen, weil sie zum Verschließen einer durchgehenden Öffnung in dem zu sichernden Gegenstand verwendet werden sollen. Je nach Gegenstand und Größe der zu verschließenden Öffnung können dabei hohe Anforderungen an die Stabilität der Sicherheitselemente gestellt werden. Banknoten beispielsweise sind während ihrer Umlaufdauer hohen Beanspruchungen ausgesetzt, werden abgegriffen, geknickt und unter Umständen Nässe ausgesetzt. Die Sicherheitselemente müssen diesen Beanspruchungen genauso standhalten können wie das Banknotenpapier selbst, da ansonsten die Gefahr bestünde, dass nach einer gewissen Umlaufzeit die durchgehende Öffnung in der Banknote freigelegt wird.

Sicherheitselemente, deren Schichtaufbau ein stabiles Trägersubstrat, typischerweise eine Kunststofffolie, umfasst, müssen auf einem Transfermaterial als vorgefertigte Einzelelemente vorliegen, was bedeutet, dass die Umrissformen der Sicherheitselemente in dem Sicherheitselementmaterial vorab vorgeschnitten werden müssen. Das Vorschneiden kann beispielsweise mittels eines Lasers durchgeführt werden. Dabei ergibt sich das Problem, dass die Schnitttiefe sehr exakt kontrolliert werden muss, um einerseits den kompletten Schichtaufbau des Sicherheitselements zu durchtrennen, andererseits aber das Trägermaterial, das beim Transfer abgetrennt wird, nicht zu verletzen. Als Trägermaterialien werden üblicherweise Kunststofffolien verwendet. Kunststofffolien haben zwar einen hohen Einreißwiderstand, aber einen geringen Weiterreißwiderstand. Wenn sie angeschnitten werden, ist es kaum zu vermeiden, dass das als Endlosmaterial vorliegende Sicherheitselement-Transfermaterial im Lauf des Übertragungsprozesses der Sicherheitselemente auf Wertgegenstände an einigen Stellen reißt. Man muss auch berücksichtigen, dass es sich bei den zu durchtrennenden Schichtaufbauten bzw. nicht zu durchtrennenden Trägerfolien um Materialien mit Dicken im Mikrometerbereich handelt. Die Sicherheitselement-Schichtaufbauten haben typischerweise Dicken im Bereich von etwa 20 µm bis 30 µm, und die Trägerfolien haben typischerweise Dicken im Bereich von 10 µm bis 20 µm. Bei der hier erforderlichen Präzision ist es problematisch, einen Schneidvorgang so durchzuführen, dass zwar der Sicherheitselement-Schichtverbund vollständig durchtrennt wird, der Schneidvorgang aber so rechtzeitig gestoppt wird, dass die Trägerfolie nirgendwo angeschnitten wird. Durch die teilweise angeschnittene Trägerfolie verliert das Sicherheitselement-Transfermaterial jedoch an Stabilität, reißt unter Umständen sogar, weshalb eine genaue und reibungslose Applikation der Sicherheitselemente aus dem Endlosmaterial auf die zu schützenden Produkte nicht mehr gewährleistet ist.

Ein Sicherheitselement-Transfermaterial in Form eines Endlosmaterials, in dem Sicherheitselemente in den gewünschten Umrissformen vorgeschnitten, und die vorgeschnittenen Elemente dann ohne Gefahr des Reißens des Trägermaterials auf zu sichernde Produkte übertragen werden können, ist aus der WO 2010/031543 A1 bekannt. Das Sicherheitselement-Transfermaterial ist ein Endlosmaterial, insbesondere ein Band mit mehreren hundert Metern Länge und einer Breite von einigen wenigen Millimetern/Zentimetern bis zu mehreren Metern. Das Sicherheitselement-Transfermaterial weist einen Sicherheitselement-Schichtverbund, d.h. das eigentliche Sicherheitselement-Material, und einen temporären Träger, d.h. das Material, auf dem die Sicherheitselemente "bevorratet" werden, auf. Der temporäre Träger basiert auf einem Trägerschichtverbund, bestehend aus einem ersten und einem zweiten temporären Trägersubstrat, die mittels einer Klebstoffschicht unlösbar verklebt sind. Der Sicherheitselement-Schichtverbund ist mit einem temporären Träger entweder unmittelbar oder mittels einer Releaseschicht verbunden. Die Releaseschicht ist von konventioneller Art und erleichtert die Ablösung der Sicherheitselemente von dem temporären Träger beim Übertragungsvorgang auf einen Wertgegenstand. Der temporäre Träger befindet sich an der Seite des Sicherheitselement-Schichtverbunds, der nach der Übertragung der Sicherheitselemente einem Betrachter zugewandt ist. Die Bezeichnung "temporäre" Trägersubstrate drückt aus, dass diese Trägersubstrate im Gegensatz zum "permanenten" Trägersubstrat nicht Bestandteil der Sicherheitselemente sind. Die Ausbildung des temporären Trägers als Trägerschichtverbund vermeidet, dass beim Schneiden der Umrissformen der Sicherheitselemente die Stabilität des temporären Trägers durch Anschneiden des temporären Trägers beeinträchtigt wird. Ein vergleichbares Ergebnis kann nicht einfach dadurch erzielt werden, dass eine einzige temporäre Trägerfolie entsprechend dicker gestaltet wird, da Kunststofffolien einen geringen Weiterreißwiderstand haben, d.h. wenn eine Folie auch nur ganz geringfügig angeschnitten ist, reißt sie leicht weiter und unter Umständen vollständig durch. Anders bei dem Trägerschichtverbund, bestehend aus einem ersten und einem zweiten temporären Trägersubstrat, die mittels einer Klebstoffschicht unlösbar verklebt sind: selbst wenn eines der temporären Trägersubstrate vollständig durchtrennt wird, bleibt das weitere temporäre Trägersubstrat (oder gegebenenfalls die weiteren temporären Trägersubstrate) in aller Regel unbeschädigt und dementsprechend stabil. Der Klebstoff bildet darüber hinaus noch eine zusätzliche "Pufferzone" zwischen den temporären Trägersubstraten.

Die in der der WO 2010/031543 A1 beschriebene Methode besteht darin, Patchfolien vor der Applikation zu entgittern. Dazu werden mit einer Stanze in die zu übertragenden Schichten die Formen des Patches gestanzt, d.h. die Schichten mit der Stanze durchbrochen. Beim Entgittern werden diese Schichten dann in den Bereichen außerhalb des Patches abgezogen, während sie in den Patch-Bereichen auf der Trägerfolie verbleiben. Damit ist sichergestellt, dass die Patches nach der Applikation saubere Ränder aufweisen. Nachteile der in der WO 2010/031543 A1 beschriebenen Methode sind jedoch die Anzahl der erforderlichen Arbeitsgänge und der hohe Materialeinsatz.

Die WO 2017/102744 A1 beschreibt ein Verfahren zur Herstellung eines Sicherheitselements, wobei bei dem Verfahren eine Grundfolie bereitgestellt wird, die eine erste Trägerfolie und eine ein- oder mehrschichtige Dekorlage aufweist, wobei auf eine zweite Trägerfolie eine erste Klebstoffschicht aufgebracht wird und auf die von der Dekorlage abgewandte Oberfläche der ersten Trägerfolie eine zweite Klebstoffschicht aufgebracht wird oder wobei die zweite Klebstoffschicht auf die von der Dekorlage abgewandte Oberfläche der ersten Trägerfolie aufgebracht wird und die erste Klebstoffschicht auf die zweite Klebstoffschicht aufgebracht wird, und wobei die zweite Trägerfolie auf die erste Trägerfolie aufgebracht wird derart, dass die erste Klebstoffschicht und die zweite Klebstoffschicht zwischen der ersten Trägerfolie und der zweiten Trägerfolie angeordnet sind, und wobei die erste Klebstoffschicht in einem ersten Bereich, der mindestens einen ersten Teilbereich der Grundfolie zumindest teilweise überdeckt, aktiviert wird und in einem an diesen Bereich angrenzenden zweiten Bereich die erste Klebstoffschicht jedoch nicht aktiviert, nicht vorgesehen, lediglich teilweise vorgesehen oder deaktiviert wird, wobei die erste Trägerfolie entlang der den mindestens einen ersten Teilbereich definierenden und den mindestens einen ersten Teilbereich von einem zweiten Teilbereich der Grundfolie trennenden Grenzlinie mindestens teilweise durchtrennt wird, und wobei ein den zweiten Teilbereich umfassender zweiter Teil der Grundfolie von der zweiten Trägerfolie abgezogen wird, wobei in dem mindestens einen ersten Teilbereich die Grundfolie aufgrund der aktivierten ersten Klebstoffschicht an der zweiten Trägerfolie haftet und eine den mindestens einen ersten Teilbereich umfassender erster Teil der Grundfolie auf der zweiten Trägerfolie verbleibt.

Die EP 3342602 A1 beschreibt ein Verfahren zum Herstellen eines mehrlagigen Wertdokumentsubstrats, aufweisend:
- Bereitstellen einer ersten und mindestens einer zweiten Schicht, wobei die erste Schicht mindestens ein optisches Element aufweist; und
- Herstellen des Wertdokumentsubstrats mittels Verbindens der bereitgestellten Schichten, wobei die mindestens eine zweite Schicht eine variierende Transparenz aufweist.

Die US10391807B2 beschreibt einen Polymerschichtverbund für ein Sicherheits- und/oder Wertdokument, umfassend mindestens zwei stoffschlüssig miteinander verbundene Polymerschichten, wobei sich in und/oder auf dem Verbund mindestens eine mit einer im sichtbaren Bereich absorbierenden Druckschicht bedruckte Oberfläche auf einer Polymerschicht des Verbundes befindet, die absorbierende Druckschicht mindestens einen Druckbereich bildet und alle Druckbereiche auf der bedruckten Oberfläche der Polymerschicht zusammen einen Flächenanteil von mindestens 50% und höchstens 95% haben.

Der Erfindung liegt die Aufgabe zugrunde, ein gegenüber dem Stand der Technik verbessertes Sicherheitselement-Transfermaterial bereitzustellen, dessen Herstellung weniger Arbeitsgänge und einen verringerten Materialeinsatz erfordern.

Diese Aufgabe wird in alternativer Weise durch die in den Hauptansprüchen 1 und 8 definierten Merkmalskombinationen gelöst. Weiterbildungen sind Gegenstand der abhängigen Ansprüche.

### Ausführliche Beschreibung der Erfindung

Eine Betrachtung im Auflicht ist im Sinne dieser Erfindung eine Beleuchtung des Wertdokuments von einer Seite und eine Betrachtung des Wertdokuments von derselben Seite. Eine Betrachtung im Auflicht liegt somit beispielsweise dann vor, wenn die Vorderseite des Wertdokuments beleuchtet und auch betrachtet wird.

Eine Betrachtung im Durchlicht ist im Sinne dieser Erfindung eine Beleuchtung eines Wertdokuments von einer Seite und eine Betrachtung des Wertdokuments von einer anderen Seite, insbesondere der gegenüberliegenden Seite. Eine Betrachtung im Durchlicht liegt somit beispielsweise dann vor, wenn die Rückseite des Wertdokuments beleuchtet und die Vorderseite des Wertdokuments betrachtet wird. Das Licht scheint somit durch das Wertdokument hindurch.

Bei einem Wertdokument im Sinne der Erfindung kann es sich z.B. um Banknoten oder Ausweisdokumente handeln, aber auch um Aktien, Urkunden, Briefmarken, Schecks, Eintrittskarten, Fahrkarten, Flugscheine, Ausweise, Visasticker oder Ähnliches sowie Etiketten, Siegel, Verpackungen oder andere Elemente. Die vereinfachende Benennung "Wertdokument" schließt deshalb im Folgenden stets Dokumente der genannten Art ein. Der Begriff Wertdokument schließt auch Sicherheitspapier zur Herstellung von Banknoten ein. Der Begriff Banknote schließt insbesondere eine Papierbanknote, eine Polymerbanknote oder eine Folienverbundbanknote ein.

Bei dem Transferelement, d.h. dem zu übertragenden Sicherheitselement, kann es sich insbesondere um einen Transfer-Patch bzw. Transfer-Etikett oder um einen Transfer-Streifen oder Transfer-Faden handeln. Die Erfindung wird in der folgenden ausführlichen Beschreibung anhand des Beispiels eines Transfer-Patches beschrieben, ist also nicht als auf einen Patch eingeschränkt auszulegen.

Anstelle des Begriffs Merkmalsschicht wird hierin auch der Begriff Funktionsschicht verwendet. Bei der Funktionsschicht kann es sich um eine einzelne (Funktions-)Schicht oder um mehrere (Funktions-)Schichten handeln.

Das erfindungsgemäße Sicherheitselement-Transfermaterial beinhaltet ein Trägersubstrat, nämlich eine Kunststofffolie, die mit einer durch Coextrudieren erzeugten Kunststoffschicht versehen ist. In Abhängigkeit von den Materialien, die für die Kunststofffolie einerseits und für die Kunststoffschicht andererseits eingesetzt werden, lassen sich Kunststofffolie/ Kunststoffschicht-Anordnungen herstellen, die an der Grenzfläche zwischen Kunststofffolie und Kunststoffschicht wahlweise entweder zu einer hohen Delamination neigen oder eine zuverlässige Haftung aufweisen und damit gegenüber Delamination widerstandsfähig sind. Mit dem Begriff "Delamination" wird hierin eine Enthaftung bezeichnet, d.h. das sich-Ablösen von Schichten innerhalb eines Verbundes bzw. Laminats. Die erfindungsgemäß eingesetzte Kunststofffolie/Kunststoffschicht-Anordnung ist eine Coex-Folie, d.h. eine koextrudierte Folie, und damit eine Verbundfolie aus mehreren Schichten, bei der mehrere Eigenschaften verschiedener Folienmaterialien kombiniert werden. Der Einsatz einer Polyesterfolie, z.B. Polyethylenterephthalat(PET), als Trägersubstrat in Verbindung mit einer darauf mittels Coextrusion aufgebrachten Kunststoffschicht auf Basis eines fremden Kunststoffmaterials, z.B. reines Polyethylennaphthalat(PEN), führt zu einer zu Delamination neigenden Kunststofffolie/Kunststoffschicht-Verbundfolie. Reines Polyethylennaphthalat(PEN) hat eine schlechte Haftung auf Polyethylenterephthalat(PET) und führt zu einer mangelnden Verankerung der auf das Trägersubstrat coextrudierten Kunststoffschicht. Hingegen führt der Einsatz einer Polyesterfolie, z.B. Polyethylenterephthalat(PET), als Trägersubstrat in Verbindung mit einer darauf mittels Coextrusion aufgebrachten Kunststoffschicht auf Basis von Polyethylennaphthalat(PEN), dem eine gewisse Menge Polyethylenterephthalat(PET) beigemischt ist, zu einer gegenüber Delamination stabilen Kunststofffolie/Kunststoffschicht-Verbundfolie.

Eine zu Delamination neigende Kunststofffolie/Kunststoffschicht-Verbundfolie wird im Sicherheitselement-Transfermaterial gemäß dem ersten Aspekt der vorliegenden Erfindung eingesetzt, das in der folgenden Beschreibung näher erklärt wird:
Das in Anspruch 1 definierte erfindungsgemäße Sicherheitselement-Transfermaterial enthält ein temporäres Trägersubstrat, nämlich eine Kunststofffolie, und einen Sicherheitselement-Schichtverbund, der eine durch Coextrudieren erzeugte Kunststoffschicht mit geringfügigem Haftungsvermögen auf dem temporären Trägersubstrat, eine Merkmalsschicht und eine für das Verkleben des Transferelements mit einem Wertgegenstand geeignete Klebschicht aufweist. Das temporäre Trägersubstrat ist z.B. eine Polyesterfolie wie etwa eine Polyethylenterephthalat(PET)-Folie. Die durch Coextrudieren erzeugte Kunststoffschicht mit geringfügigem Haftungsvermögen auf dem temporären Trägersubstrat kann zweckmäßigerweise auf Polyethylennaphthalat(PEN) basieren. Infolge der Verwendung der coextrudierten Folie können Sicherheitselement-Transfermaterialien erhalten werden, die verglichen mit den im Stand der Technik bekannten Sicherheitselement-Transfermaterialien eine deutlich dünnere Gesamtdicke aufweisen. Dies ist möglich, weil die coextrudierte Kunststoffschicht sehr dünn, insbesondere mit einer Dicke von weniger als 1 µm, erzeugbar ist. Zweckmäßigerweise weist die coextrudierte Kunststoffschicht eine Schichtdicke in einem Bereich von 2 bis 4 µm auf.

Das Sicherheitselement-Transfermaterial gemäß dem ersten Aspekt der Erfindung eignet sich insbesondere für das Erzielen eines dünnen, Patch-förmigen, auf ein Sicherheitspapier oder ein Polymersubstrat wie etwa eine Polymerbanknote aufgebrachten Sicherheitselements, wobei das Sicherheitspapier bzw. Polymersubstrat im Bereich des darauf angeordneten Sicherheitselements vollflächig vom Sicherheitselement bedeckt wird (d.h. das Sicherheitspapier bzw. Polymersubstrat weist im Bereich des darauf angeordneten Sicherheitselements vorzugsweise keine Aussparung auf, die vom Sicherheitselement abgedeckt wird).

Beim Verkleben des Transferelements mit einem Wertgegenstand erfolgt der Release bzw. das Ablösen innerhalb des Sicherheitselement-Transfermaterials gemäß dem ersten Aspekt der Erfindung an der Grenzfläche zwischen der Kunststofffolie und der darauf durch Coextrudieren erzeugten Kunststoffschicht.

Dadurch, dass bei dem Patch-förmigen, auf ein Sicherheitspapier oder ein Polymersubstrat wie etwa eine Polymerbanknote aufgebrachten Sicherheitselement die coextrudierte Kunststoffschicht oben als äußerste Schicht vorhanden ist, lässt sich ein hervorragender Schutz des sensiblen Sicherheitselement-Schichtverbunds gegenüber einer mechanischen Beschädigung im Banknotenumlauf oder gegenüber einer chemischen Beschädigung durch Lösungsmittel oder dergleichen erzielen.

Der temporäre Träger des Sicherheitselement-Transfermaterials gemäß dem ersten Aspekt der Erfindung kann im einfachsten Fall in Form einer einzelnen Kunststofffolie, z.B. eine Polyethylenterephthalat(PET)-Folie, vorliegen. Gemäß einer bevorzugten Ausführungsform kann der temporäre Träger aber auch in Anlehnung an die WO 2010/031543 A1 auf einem Trägerschichtverbund basieren, der ein erstes und ein zweites temporäres Trägersubstrat aufweist, die mittels einer Klebstoffschicht unlösbar verklebt sind.

Darüber hinaus können die Umrissformen der Sicherheitselemente in dem Sicherheitselement-Schichtverbund vorgeschnitten sein.

Eine gegenüber Delamination widerstandsfähige Kunststofffolie/ Kunststoffschicht-Verbundfolie wird im in Anspruch 8 definierten erfindungsgemäßen Sicherheitselement-Transfermaterial gemäß dem zweiten Aspekt der vorliegenden Erfindung eingesetzt, das in der folgenden Beschreibung näher erklärt wird:
Das Sicherheitselement-Transfermaterial enthält als temporäres Trägersubstrat eine Kunststofffolie, die mit einer durch Coextrudieren erzeugten Kunststoffschicht mit hohem Haftungsvermögen auf der Kunststofffolie versehen ist. Das Sicherheitselement-Transfermaterial enthält weiterhin einen Sicherheitselement-Schichtverbund, der eine Merkmalsschicht, ein permanentes Trägersubstrat und eine für das Verkleben des Transferelements mit einem Wertgegenstand geeignete Klebschicht aufweist. Die Kunststofffolie des temporären Trägersubstrats ist z.B. eine Polyesterfolie wie etwa eine Polyethylenterephthalat(PET)-Folie. Die durch Coextrudieren erzeugte Kunststoffschicht mit hohem Haftungsvermögen basiert z.B. auf Polyethylennaphthalat(PEN), dem eine gewisse Menge Polyethylenterephthalat(PET) beigemischt ist.

Das Sicherheitselement-Transfermaterial gemäß dem zweiten Aspekt der Erfindung eignet sich insbesondere für das Erzielen eines eine Aussparung im Wertdokument abdeckenden, Patch-förmigen Sicherheitselements.

Beim Verkleben des Transferelements mit einem Wertgegenstand erfolgt der Release bzw. das Ablösen innerhalb des Sicherheitselement-Transfermaterials gemäß dem zweiten Aspekt der Erfindung an der Grenzfläche zwischen der durch Coextrudieren erzeugten Kunststoffschicht und dem darauf angeordneten Sicherheitselement-Schichtverbund.

Das Sicherheitselement-Transfermaterials gemäß dem zweiten Aspekt der Erfindung ist verglichen mit den im Stand der Technik bekannten Sicherheitselement-Transfermaterialien vorteilhaft, weil ein zu tiefes Eindringen des Stanzmessers oder der Laserstrahlung im Schritt des Schneidens der Umrissformen der Sicherheitselemente in den Sicherheitselement-Schichtverbund vermieden werden kann. Des Weiteren ist der Aufbau des Sicherheitselement-Transfermaterials gemäß dem zweiten Aspekt der Erfindung verglichen mit dem aus der WO 2010/031543 A1 bekannten Sicherheitselement-Transfermaterial vorteilhaft, weil bei der Herstellung weniger Arbeitsschritte und Verklebungsschritte erforderlich sind und auf eine Folie verzichtet werden kann.

Die folgenden Anmerkungen sind grundsätzlicher Art und betreffen sowohl das Sicherheitselement-Transfermaterial gemäß dem ersten Aspekt der Erfindung als auch das Sicherheitselement-Transfermaterial gemäß dem zweiten Aspekt der Erfindung:
Geeignete Merkmalsschichten bzw. Funktionsschichten stellen optisch variable Sicherheitsmerkmale bereit, also z.B. Prägehologramme, Mikrospiegelelemente, Subwellenlängenstrukturen und dergleichen. Die optisch variablen Sicherheitsmerkmale sind in der Regel durch einen Prägelack, z.B. ein UV-Prägelack, mit darin eingeprägten Mikrostrukturen sowie einer zumindest bereichsweise vorliegenden Metallisierung gegeben. Oft liegen hier noch weitere Schichten vor, z.B. Schutzlacke oder Primer, an die sich dann am Ende der Heißsiegellack anschließt. Auch die Heißsiegellackschicht kann tatsächlich aus mehreren Schichten unterschiedlicher Lacke bestehen.

Bei der Applikation bzw. Endanwendung wird der Patch wie üblich erwärmt, wobei der Heißsiegellack aufschmilzt und mit dem (Wertdokument-)Substrat verklebt. Das (Wertdokument-)Substrat kann z.B. ein Papier- oder Polymersubstrat oder ein Papier/Polymer-Verbundsubstrat sein. Die Erwärmung kann dabei bereichsweise (d.h. in einem Bereich, der etwas größer als der Patch selbst ist) oder vollflächig erfolgen. Trennt man dann den temporären Träger vom (Wertdokument-)Substrat, so verbleiben die Funktionsschichten im Patch-Bereich am (Wertdokument-)Substrat, da der Heißsiegellack zum Papier für eine stärkere Haftung sorgt als die Haftung zwischen temporären Träger und Funktionsschichten.

Weitere bevorzugte Ausführungsvarianten:

### Funktionsschichten bzw. Merkmalsschichten:

In den Funktionsschichten können z.B. Mikrospiegel, Hologrammstrukturen, Subwellenlängenstrukturen oder (z.B. eingebettete) Mikrolinsen eingebracht sein. Mikrolinsen können insbesondere in Kombination mit in einer separaten Ebene ausgebildeten Mikrobildern vorliegen und auf diese Weise optisch variable Sicherheitsmerkmale in Form sogenannter Moire-Magnifier, Modulo-Mapper, Kippbilder und dergleichen erzeugen. Auf Mikrolinsen in Kombination mit Mikrobildern basierende Sicherheitsmerkmale sind z.B. aus der WO 2006/087138 A1 bekannt.

Mikrospiegel, Hologammstrukturen u.s.w. sind in der Regel mit einer zumindest bereichsweise vorliegenden Metallisierung beschichtet, die aus einem Metall, z.B. Al oder Ag, einer hochbrechenden Beschichtung, z.B. ZnS oder TiO₂, oder einem farbkippenden Dreischichtsystem Reflektor/Dielektrikum/Absorber bestehen kann (z.B. ein Al/SiO₂/Cr-Aufbau).

### Klebschicht, insbesondere Heißsiegellack:

Wesentlich für den Heißsieggellack ist, dass er am Ende bei der Applikation durch Druck und ggf. erhöhte Temperatur für die gewünschte Verklebung sorgt. Durch die Wärme kann er aufschmelzen und/oder aktiviert werden. Es kann auch vorgesehen sein, den Heißsiegellack anschließend z.B. mittels UV-Strahlung noch nachzubehandeln (Nachvernetzung).

### Trägersubstrat, insbesondere Trägerfolie:

Als Trägerfolien werden vorzugsweise eher dickere Folien eingesetzt, z.B. eine 19 µm dicke Polyethylenterephthalat(PET)-Folie. Es muss sichergestellt werden, dass die Trägerfolie nach der Applikation des Patches auf das (Wertdokument-)Substrat nicht reißt. Gemäß einer Variante wird hierbei als Trägerfolie nicht eine einzelne Trägerfolie verwendet, sondern ein aus zwei Folien bestehender Kaschierverbund, wie er aus der WO 2010/031543 A1 bekannt ist (z.B. eine 12 µm dicke Folie und eine 19 µm dicke Folie, die miteinander verklebt sind): dann wird beim Stanzen nur eine der beiden Folien angestanzt, während die zweite Folie unbeschädigt bleibt. Eine einzelne angestanzte Folie reißt leichter als ein Kaschierverbund, da der "Anriss" einer Folie mehr Kraft erfordert als das Weiterreißen.

### Applikation des Transferpatches auf das (Wertdokument-)Substrat:

Für einen besseren Transfer kann es vorteilhaft sein, die Trägerfolie über eine scharfe Kante (bzw. einen Keil) vom restlichen Schichtverbund abzuziehen.

### Weitere bevorzugte Parameter:

- Die Funktionsschichten enthalten vorzugsweise Prägelacke, die typischerweise eine Gesamtdicke in einem Bereich von 2 µm bis 7 µm aufweisen. Typische Prägetiefen können ja nach Strukturtyp in einem Bereich von z.B. 100 nm bis 3,5 µm liegen.
- Die Gesamtdicke des Patches ohne Trägerfolie liegt bevorzugt unterhalb von 50 µm, weiter bevorzugt unterhalb von 30 µm und insbesondere bevorzugt unterhalb von 20 µm.
- Typische Patch-Abmessungen liegen bei einer Breite von z.B. 5 mm bis 35 mm und Höhen von z.B. 5 mm bis 70 mm.
- Die Patch-Form kann beliebig gewählt werden. Ovale Formen sind in der Regel einfacher zu applizieren als z.B. rechteckige Formen. Unter Umständen kann ein gezackter Rand von Vorteil sein.

### Weitere grundsätzliche Anmerkungen:

Die erfindungsgemäß verwendbare Prägestruktur ist insbesondere in einen Prägelack eingeprägt. Im Rahmen der vorliegenden Anmeldung umfasst der Ausdruck "optisch-variabler Effekt" neben Hologrammen auch hologrammähnliche Beugungsstrukturen, also beispielsweise Strukturen, die kein definiertes Bild, sondern einen verschwommen farbigen Eindruck erzeugen. Ebenso unter dem Ausdruck "optisch-variabler Effekt" subsumiert werden Beugungsmuster, Strukturen mit Farbkippeffekt, Kinoforme, Strukturen mit einem Mikrolinseneffekt, Strukturen mit isotropen oder anisotropen Streuungseffekten oder mit anderen Interferenzeffekten, Subwellenlängenstrukturen, Mottenaugenstrukturen, Mikrolinsenstrukturen und Mikrostrukturen für Moire-Magnifier oder Modulo Mapper, Mikrospiegelstrukturen und Mikroprismenstrukturen.

Bevorzugte reflektierende Prägestrukturen enthalten z.B. einen interferenzfähigen, mehrschichtigen Aufbau mit
- einer reflektierenden Schicht (insbesondere einer metallischen, reflektierenden Schicht);
- einer semitransparenten (Spiegel-)Schicht (die insbesondere von der Gruppe bestehend aus Al, Ag, Ni, Cr, Cu, Au und einer Legierung eines oder mehrerer der vorstehend genannten Elemente gewählt ist); und
- einer zwischen der reflektierenden Schicht und der semitransparenten (Spiegel-)Schicht angeordneten dielektrischen Schicht,
wobei sich die Farbe des mehrschichtigen Aufbaus mit der Änderung des Betrachtungswinkels ändert.

Es ist möglich, ein bei Betrachtung der Vorderseite im Auflicht erkennbares erstes Erscheinungsbild des interferenzfähigen, mehrschichtigen Aufbaus und ein bei Betrachtung der Vorderseite im Durchlicht erkennbares zweites Erscheinungsbild des interferenzfähigen, mehrschichtigen Aufbaus zu erzeugen, z.B. durch Aussparungen in der reflektierenden Schicht und/oder der semitransparenten Schicht. Ein solches Foliensicherheitselement mit unterschiedlichem Auflicht-/Durchlicht-Erscheinungsbild ist aus der WO 2009/149831 A2 bekannt. Beispielsweise kann die semitransparente Schicht eine Vielzahl rasterartig angeordneter Aussparungen aufweisen, die in ihrer Gesamtheit ein Zeichen, ein Bild oder ein Muster ergeben. Das auf diese Weise erzeugte Muster ist im Auflicht sichtbar und verschwindet im Durchlicht. Alternativ und/oder zusätzlich kann ein unterschiedliches Auflicht-/Durchlicht-Erscheinungsbild des mehrschichtigen Aufbaus dadurch bewerkstelligt werden, dass man den Aufbau mit einer Reliefstruktur kombiniert, insbesondere einer diffraktiven Reliefstruktur, einer mikrooptischen Reliefstruktur oder einer Sublambda-Struktur.

Weitere bevorzugte reflektierende Prägestrukturen enthalten z.B. einen mehrschichtigen Aufbau mit zwei semitransparenten Schichten und einer zwischen den zwei semitransparenten Schichten angeordneten dielektrischen Schicht, wobei der mehrschichtige Aufbau bei der Betrachtung im Auflicht einerseits und bei der Betrachtung im Durchlicht andererseits unterschiedliche Farbtöne aufweist, insbesondere bei der Betrachtung im Auflicht goldfarben erscheint und bei der Betrachtung im Durchlicht einen blauen Farbton zeigt. Die beiden unterschiedlichen Farbtöne sind insbesondere Komplementärfarben. Ein solcher mehrschichtiger Aufbau beruht insbesondere auf zwei semitransparenten Spiegelschichten und einer zwischen den zwei semitransparenten Spiegelschichten angeordneten dielektrischen Schicht. Ein solcher mehrschichtiger Aufbau, der bei der Betrachtung im Auflicht goldfarben erscheint und bei der Betrachtung im Durchlicht einen blauen Farbton zeigt, ist z.B. aus der WO 2011/082761 A1 bekannt. Als semitransparente Spiegelschicht eignet sich insbesondere ein Metall, das von der Gruppe bestehend aus Al, Ag, Ni, Cr, Cu, Au und einer Legierung eines oder mehrerer der vorstehend genannten Elemente gewählt ist, wobei Al oder Ag als semitransparente Spiegelschicht bevorzugt werden und Al insbesondere bevorzugt wird. Geeignete mehrschichtige Aufbauten mit zwei semitransparenten Spiegelschichten und einer zwischen den zwei semitransparenten Spiegelschichten angeordneten dielektrischen Schicht haben vorzugsweise die folgende gegenständliche Beschaffenheit:
- die beiden semitransparenten Spiegelschichten werden bevorzugt von Al oder Ag gewählt; die dielektrische Schicht ist insbesondere eine SiO₂-Schicht;
- im Falle, dass jede der beiden semitransparenten Spiegelschichten auf Al beruht, liegt die jeweilige bevorzugte Schichtdicke in einem Bereich von 5 nm bis 20 nm, insbesondere bevorzugt in einem Bereich von 10 nm bis 14 nm; die dielektrische SiO₂-Schicht hat vorzugsweise eine Schichtdicke in einem Bereich von 50 nm bis 450 nm, weiter bevorzugt in einem Bereich von 80 nm bis 260 nm, wobei die Bereiche von 80nm bis 100nm und von 220nm bis 240nm speziell für die Bereitstellung eines Gold/Blau-Farbwechsels besonders bevorzugt werden ;
- im Falle, dass jede der beiden semitransparenten Spiegelschichten auf Ag beruht, liegt die jeweilige bevorzugte Schichtdicke in einem Bereich von 15 nm bis 25 nm; die dielektrische SiO₂-Schicht hat vorzugsweise eine Schichtdicke in einem Bereich von 50 nm bis 450 nm, weiter bevorzugt in einem Bereich von 80 nm bis 260 nm, wobei die Bereiche von 80nm bis 100nm und von 220nm bis 240nm speziell für die Bereitstellung eines Gold/Blau-Farbwechsels besonders bevorzugt werden.

Die genannten mehrschichtigen Schichtaufbauten ermöglichen nicht nur die Erzeugung einer semitransparenten Funktionsschicht, die bei Betrachtung im Auflicht goldfarben erscheint und bei der Betrachtung im Durchlicht einen blauen Farbton zeigt, sondern es können je nach Wahl der Schichtdicke insbesondere der dielektrischen Schicht weitere Farbwechsel erzeugt werden, z.B.
- im Auflicht Magenta, im Durchlicht Blau-Grün;
- im Auflicht Türkis, im Durchlicht Orange-Gelb;
- im Auflicht Gold, im Durchlicht Blau-Violett;
- im Auflicht Silber, im Durchlicht Violett.

Weitere bevorzugte reflektierende Prägestrukturen enthalten z.B. eine Flüssigkristallschicht, die bei der Betrachtung im Auflicht eine andere Farbe wie bei der Betrachtung im Durchlicht zeigt. Alternativ und/oder zusätzlich kann ein unterschiedliches Auflicht-/Durchlicht-Erscheinungsbild dadurch bewerkstelligt werden, dass man die Flüssigkristallschicht mit einer Reliefstruktur kombiniert, insbesondere einer diffraktiven Reliefstruktur, einer mikrooptischen Reliefstruktur oder einer Sublambda-Struktur.

Weitere bevorzugte reflektierende Prägestrukturen enthalten z.B. eine Druckschicht mit einer Effektpigment-Zusammensetzung, die bei der Betrachtung im Auflicht eine andere Farbe wie bei der Betrachtung im Durchlicht zeigt, insbesondere einen Gold/ Blau-Farbwechsel, einen Gold/Violett-Farbwechsel, einen Grün-Gold/Magenta-Farbwechsel, einen Violett/Grün-Farbwechsel oder einen Silber/Opak-Farbwechsel zeigt. Solche Druckfarben werden z.B. in der WO 2011/064162 A2 beschrieben. Alternativ und/oder zusätzlich kann ein unterschiedliches Auflicht-/Durchlicht-Erscheinungsbild dadurch bewerkstelligt werden, dass man die Druckschicht mit einer Reliefstruktur kombiniert, insbesondere einer diffraktiven Reliefstruktur, einer mikrooptischen Reliefstruktur oder einer Sublambda-Struktur.

Die eine diffraktive Struktur bildende Reliefstruktur ist insbesondere eine Hologrammstruktur. Die Abmessungen der Strukturelemente der diffraktiven Struktur liegen vorzugsweise in der Größenordnung der Lichtwellenlänge, weiter bevorzugt in einem Bereich, der größer als 100nm und weniger als 1µm ist, wobei ein Bereich größer als 300nm und weniger als 1µm insbesondere bevorzugt ist.

Die eine Mikrospiegelanordnung bildende Reliefstruktur wird hierin auch als mikrooptische Reliefstruktur bezeichnet. Die Herstellung einer mikrooptischen Reliefstruktur ist im Stand der Technik bekannt (siehe z.B. die WO 2014/060089 A2). Die Abmessungen der Strukturelemente der Mikrospiegelanordnung liegen vorzugsweise in einem Bereich, der größer als 1µm und weniger als 40µm ist, wobei ein Bereich größer als 1µm und weniger als 30µm insbesondere bevorzugt ist. Die Abmessungen der Strukturelemente der Mikrospiegelanordnung weisen beispielsweise eine Höhe bis zu 15µm und eine laterale Ausdehnung bis zu 30µm auf. Dabei sind sowohl die Höhe, als auch die laterale Ausdehnung der Strukturelemente der Mikrospiegelanordnung vorzugsweise größer als 1µm.

Weitere bevorzugte mikrooptische Reliefstrukturen sind z.B. aus der WO 2007/079857 A1 bekannt. Hierbei hat die reflektierende Mikrostruktur die Form eines Mosaiks aus einer Vielzahl reflektierender Mosaikelemente, die durch die Parameter Größe, Umrissform, Reliefform, Reflexionsvermögen und räumliche Ausrichtung charakterisiert sind und die ein vorbestimmtes Motiv bilden, indem verschiedene Gruppen von Mosaikelementen mit unterschiedlichen charakteristischen Parametern einfallendes Licht in unterschiedliche Raumbereiche reflektieren, und bei dem die Mosaikelemente eine laterale Abmessung unterhalb der Auflösungsgrenze des Auges aufweisen.

Weitere Ausführungsbeispiele sowie Vorteile der Erfindung werden nachfolgend anhand der schematisch stark vereinfachten Figuren erläutert, bei deren Darstellung auf eine maßstabs- und proportionsgetreue Wiedergabe verzichtet wurde, um die Anschaulichkeit zu erhöhen.

Es zeigen:
- Figuren 1 bis 4: ein Ausführungsbeispiel für die Verwendung eines erfindungsgemäßen Sicherheitselement-Transfermaterials gemäß dem ersten Aspekt der Erfindung;
- Figuren 5 bis 8: ein Ausführungsbeispiel für die Verwendung eines erfindungsgemäßen Sicherheitselement-Transfermaterials gemäß dem zweiten Aspekt der Erfindung; und
- Figur 9: ein mit zwei Sicherheitselementen versehenes Wertdokument, im Beispiel eine Banknote, wobei die Sicherheitselemente Transfer-Patche sind, die jeweils aus dem erfindungsgemäßen Sicherheitselement-Transfermaterials gemäß dem ersten Aspekt der Erfindung bzw. dem erfindungsgemäßen Sicherheitselement-Transfermaterials gemäß dem zweiten Aspekt der Erfindung hervorgegangen sind.

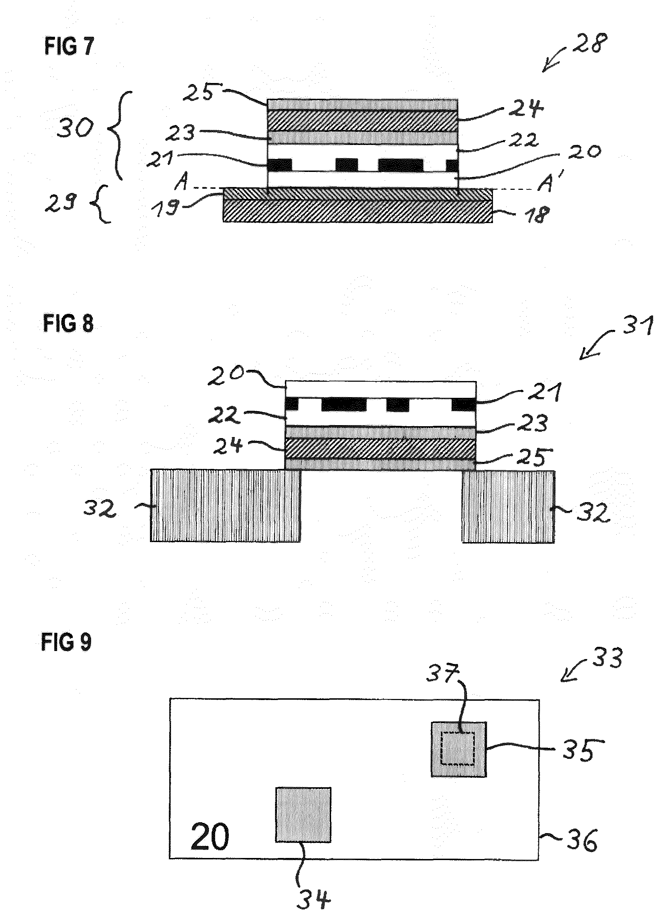

Die Figur 9 zeigt ein Wertdokument 33, im Beispiel eine Papierbanknote mit der Denomination "20". Das Papiersubstrat 36 der Banknote 33 ist mit zwei Sicherheitselementen 34 und 35 versehen, im Beispiel jeweils ein Patch. Der Patch 34 ist aus dem erfindungsgemäßen Sicherheitselement-Transfermaterial gemäß dem ersten Aspekt der Erfindung hervorgegangen. Das Papiersubstrat 36 der Banknote 33 wird im Bereich des Patch-förmigen Sicherheitselements 34 vollflächig vom Patch 34 abgedeckt. Der weitere Patch 35 ist aus dem erfindungsgemäßen Sicherheitselement-Transfermaterial gemäß dem zweiten Aspekt der Erfindung hervorgegangen. Das Papiersubstrat 36 der Banknote 33 weist innerhalb des Bereichs des Patch-förmigen Sicherheitselements 35 eine quadratische, z.B. durch Stanzen oder durch Laserschneiden erhältliche Aussparung 37 auf. Die Aussparung 37 im Papier 36 wird somit einseitig vom Patch 35 abgedeckt bzw. verschlossen.

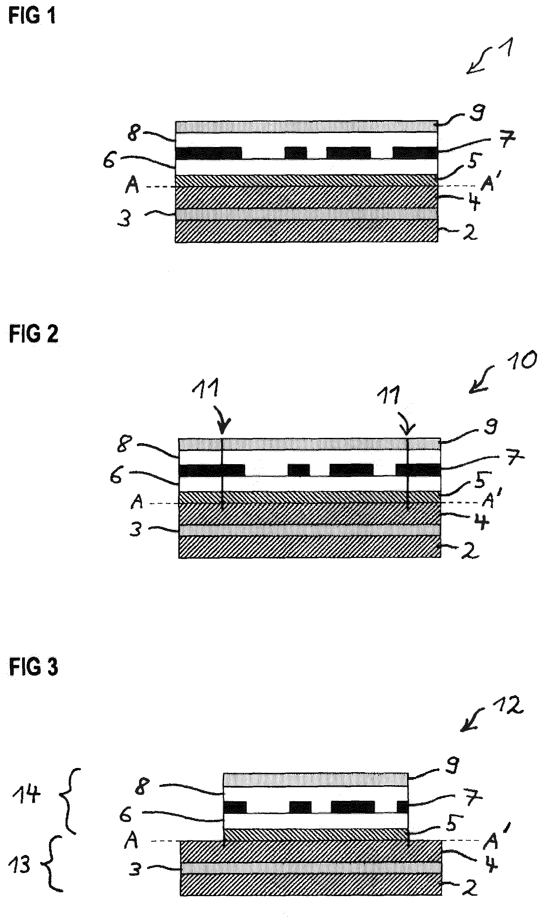

Die Figuren 1 bis 4 veranschaulichen ein Ausführungsbeispiel für die Verwendung eines erfindungsgemäßen Sicherheitselement-Transfermaterials gemäß dem ersten Aspekt der Erfindung, das z.B. für die Bereitstellung des Patch-förmigen Sicherheitselements 34 in der Figur 9 geeignet ist.

Die Figur 1 zeigt ein Sicherheitselement-Transfermaterial 1, das ein die Schichten 2, 3 und 4 enthaltendes Trägermaterial (= temporärer Träger) und ein die Schichten 5, 6, 7, 8 und 9 enthaltendes Obermaterial enthält. Mit der gestrichelten Linie A-A' ist die Fläche dargestellt, an der später im Zuge des Aufbringens des Obermaterials (d.h. das auf das Wertdokument aufzubringende Sicherheitselement bzw. Transferelement) auf ein Wertdokument das sich-Ablösen des Obermaterials vom temporären Träger erfolgt.

Das Sicherheitselement-Transfermaterial 1 beinhaltet eine koextrudierte Folie, d.h. eine Verbundfolie aus einer Polyethylenterephthalat(PET)-Folie 4 mit einer Dicke von 19µm und einer darauf angeordneten Kunststoffschicht 5 auf Basis eines fremden Kunststoffmaterials, im Beispiel reines Polyethylennaphthalat(PEN). Bei der die Schichten 4 und 5 aufweisenden koextrudierten Folie handelt es sich um eine entlang der gedachten Linie A-A' zu Delamination neigenden Kunststofffolie/ Kunststoffschicht-Verbundfolie. Die die Schichten 4 und 5 aufweisende koextrudierte Folie wurde anschließend mittels einer Klebschicht 3 mit einer weiteren Polyethylenterephthalat(PET)-Folie 2 mit einer Dicke von 12µm unlösbar verklebt. Anschließend wurde oberhalb der Kunststoffschicht 5 eine UV-Prägelackschicht 6 aufgebracht, die mit Mikrostrukturen und/oder Nanostrukturen versehen ist (die Prägestrukturen sind in der Figur nicht gezeigt). Die UV-Prägelackschicht 6 wurde anschließend mit einer Metallisierung 7 versehen, die in Form eines Musters oder in Form von Zeichen gebildet ist. Die Metallisierung 7 enthält Aussparungen, die eine sogenannte Negativschrift bilden. Das Bereitstellen der Metallisierung 7 kann z.B. mittels eines im Stand der Technik bekannten Waschverfahrens erfolgen, siehe z.B. die EP 1 972 462 A2. Oberhalb der Metallisierung 7 wurde anschließend eine Primerschicht 8 aufgebracht, die eigentlich als ein einebnender Schutzlack dient. Schließlich wurde oberhalb der Primerschicht 8 eine zur Verklebung mit einem Wertdokument geeignete Klebschicht 9, nämlich eine Heißsiegellackschicht, aufgebracht.

Die in der Figur 2 gezeigten Linien 11 deuten an, wie der Sicherheitselement-Schichtverbund eingeschnitten wird, um die Sicherheitselemente in ihren Umrissformen vorzuschneiden. Das Schneiden kann mittels einer Stanze oder mittels eines geeigneten Lasers, z.B. ein CO₂-Laser, erfolgen. Wie man sieht, dringen die Schnitte 11 in die Kunststofffolie 4 des temporären Trägers ein. Die Kunststofffolie 4 wird durch die Schnitte 11 destabilisiert und kann bei leichten Dehnungen, wie sie im Laufe des Übertragungsprozesses der Sicherheitselemente praktisch unvermeidbar sind, an den Stellen der Einschnitte leicht reißen.

Anschließend wird das überschüssige Material des Sicherheitselement-Schichtverbunds (in der Querschnittsdarstellung gemäß der Figur 2 das Material außerhalb der Schnitte 11) im Schritt des sogenannten "Entgitterns" entfernt, wodurch in dem Sicherheitselement-Schichtverbund Lücken entstehen. Dieser Zustand ist in der Figur 3 gezeigt. Die durch Coextrudieren erzeugte, auf Polyethylennaphthalat(PEN) basierende Kunststoffschicht 5 mit geringfügigem Haftungsvermögen auf dem temporären Trägersubstrat 4 erleichtert das Entfernen des überschüssigen Materials. Beidseitig der Lücke befinden sich Sicherheitselemente 14. Mit der Bezugsnummer 13 ist der temporäre Träger bezeichnet. Die Sicherheitselemente 14 bilden gewissermaßen Inseln, die auf dem temporären Träger 13 angeordnet sind. Figur 3 zeigt das erfindungsgemäße Sicherheitselement-Transfermaterial als ein Endlosband, bei dem sich in Richtung der Breite jeweils nur ein Sicherheitselement 14 befindet. In der Praxis können die Endlosbänder breiter sein und eine Vielzahl von nebeneinander angeordneten Sicherheitselementen 14 umfassen.

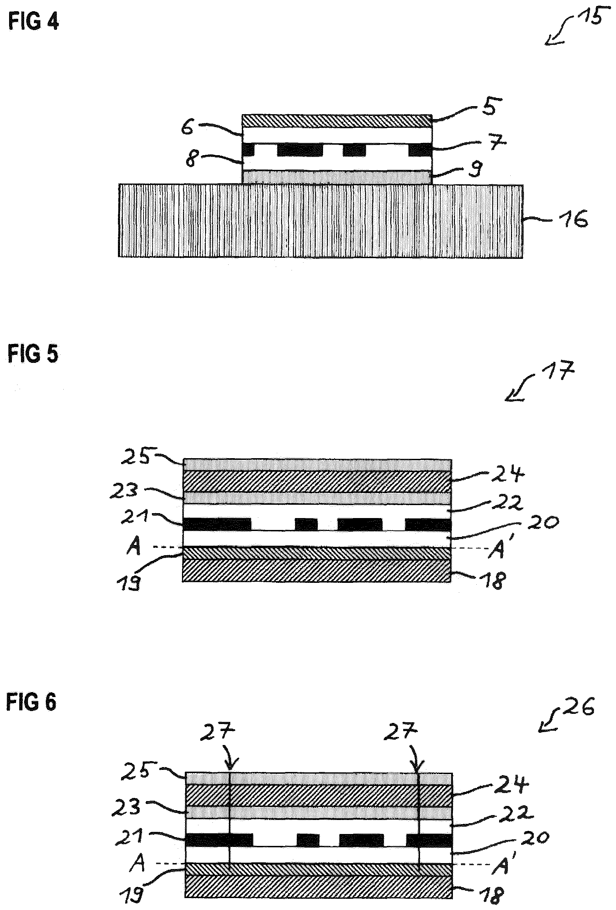

Die Figur 4 zeigt das Sicherheitselement 14 nach dem Übertragen vom Sicherheitselement-Transfermaterial auf ein Sicherheitspapier 16. Das Sicherheitselement 14 ist mittels der Klebschicht 9 mit dem Sicherheitspapiersubstrat 16 eines Wertdokuments verbunden. Oberhalb der Klebschicht 9 befindet sich die Primerschicht 8, gefolgt von der Aussparungen aufweisenden und damit ein Muster oder Zeichen bildenden Metallisierung 7 und der UV-Prägelackschicht 6. Die als oberste Schicht angeordnete, durch Coextrudieren erzeugte und auf Polyethylennaphthalat(PEN) basierende Kunststoffschicht 5 dient als Schutzschicht. Auf diese Weise lässt sich ein hervorragender Schutz des sensiblen Sicherheitselement-Schichtverbunds gegenüber einer mechanischen Beschädigung z.B. im Banknotenumlauf oder gegenüber einer chemischen Beschädigung durch Lösungsmittel oder dergleichen erzielen

Die Figuren 5 bis 8 veranschaulichen ein Ausführungsbeispiel für die Verwendung eines erfindungsgemäßen Sicherheitselement-Transfermaterials gemäß dem zweiten Aspekt der Erfindung, das z.B. für die Bereitstellung des Patch-förmigen Sicherheitselements 35 in der Figur 9 geeignet ist. Das Papiersubstrat 36 der Banknote 33 weist innerhalb des Bereichs des Patch-förmigen Sicherheitselements 35 eine quadratische, z.B. durch Stanzen oder durch Laserschneiden erhältliche Aussparung 37 auf. Die Aussparung 37 im Papier 36 wird somit einseitig vom Patch 35 abgedeckt bzw. verschlossen.

Die Figur 5 zeigt ein Sicherheitselement-Transfermaterial 17, das ein die Schichten 18 und 19 enthaltendes Trägermaterial (= temporärer Träger) und ein die Schichten 20, 21, 22, 23, 24 und 25 enthaltendes Obermaterial enthält. Mit der gestrichelten Linie A-A' ist die Fläche dargestellt, an der später im Zuge des Aufbringens des Obermaterials (d.h. das auf das Wertdokument aufzubringende Sicherheitselement bzw. Transferelement) auf ein Wertdokument das sich-Ablösen des Obermaterials vom temporären Träger erfolgt.

Das Sicherheitselement-Transfermaterial 17 beinhaltet eine koextrudierte Folie, d.h. eine Verbundfolie aus einer Polyethylenterephthalat(PET)-Folie 18 mit einer Dicke von 19µm und einer darauf angeordneten Kunststoffschicht 19 auf Basis von Polyethylennaphthalat(PEN), dem eine gewisse Menge Polyethylenterephthalat(PET) beigemischt ist. Die Schichten 18 und 19 bilden eine gegenüber Delamination stabile Kunststofffolie/ Kunststoffschicht-Verbundfolie. Anschließend wurde eine UV-Prägelackschicht 20 aufgebracht, die mit Mikrostrukturen und/oder Nanostrukturen versehen ist (die Prägestrukturen sind in der Figur nicht gezeigt). Die UV-Prägelackschicht 20 wurde daraufhin mit einer Metallisierung 21 versehen, die in Form eines Musters oder in Form von Zeichen gebildet ist. Die Metallisierung 21 enthält Aussparungen, die eine sogenannte Negativschrift bilden. Das Bereitstellen der Metallisierung 21 kann z.B. mittels eines im Stand der Technik bekannten Waschverfahrens erfolgen, siehe z.B. die EP 1 972 462 A2. Oberhalb der Metallisierung 21 wurde anschließend eine Primerschicht 22 aufgebracht, die eigentlich als ein einebnender Schutzlack dient. Schließlich wurde oberhalb der Primerschicht 22 mittels einer Klebschicht 23 ein stationäres Trägersubstrat 24, nämlich eine Polyethylenterephthalat(PET)-Folie, und eine zur Verklebung mit einem Wertdokument geeignete Klebschicht 25, nämlich eine Heißsiegellackschicht, aufgebracht.

Die in der Figur 6 gezeigten Linien 27 deuten an, wie der Sicherheitselement-Schichtverbund eingeschnitten wird, um die Sicherheitselemente in ihren Umrissformen vorzuschneiden. Das Schneiden kann mittels einer Stanze oder mittels eines geeigneten Lasers, z.B. ein CO₂-Laser, erfolgen. Wie man sieht, dringen die Schnitte 27 in die durch Coextrusion erzeugte Kunststoffschicht 19, nicht aber in die Kunststofffolie 18 des temporären Trägers ein.

Anschließend wird das überschüssige Material des Sicherheitselement-Schichtverbunds (in der Querschnittsdarstellung gemäß der Figur 6 das Material außerhalb der Schnitte 27) im Schritt des sogenannten "Entgitterns" entfernt, wodurch in dem Sicherheitselement-Schichtverbund Lücken entstehen. Dieser Zustand ist in der Figur 7 gezeigt. Die durch Coextrudieren erzeugte, auf Polyethylennaphthalat(PEN) mit beigemischtem Polyethylenterephthalat(PET) basierende Kunststoffschicht 19 mit hohem Haftungsvermögen auf dem Trägersubstrat 18 dient als eine Releaseschicht und erleichtert das Entfernen des überschüssigen Materials. Beidseitig der Lücke befinden sich Sicherheitselemente 30. Mit der Bezugsnummer 29 ist der temporäre Träger bezeichnet. Die Sicherheitselemente 30 bilden gewissermaßen Inseln, die auf dem temporären Träger 29 angeordnet sind.

Figur 7 zeigt das erfindungsgemäße Sicherheitselement-Transfermaterial als ein Endlosband, bei dem sich in Richtung der Breite jeweils nur ein Sicherheitselement 30 befindet. In der Praxis können die Endlosbänder breiter sein und eine Vielzahl von nebeneinander angeordneten Sicherheitselementen 30 umfassen.

Die Figur 8 zeigt das Sicherheitselement 30 nach dem Übertragen vom Sicherheitselement-Transfermaterial auf ein Sicherheitspapier 32. Das Sicherheitselement 30 ist mittels der Klebschicht 25 mit dem Sicherheitspapiersubstrat 32 eines Wertdokuments verbunden. Das Papiersubstrat 32 der Banknote 33 weist innerhalb des Bereichs des Patch-förmigen Sicherheitselements 30 eine z.B. durch Stanzen oder durch Laserschneiden erhältliche Aussparung auf. Oberhalb der Klebschicht 25 befinden sich das stationäre Trägersubstrat 24, die Klebschicht 23, die Primerschicht 22, gefolgt von der Aussparungen aufweisenden und damit ein Muster oder Zeichen bildenden Metallisierung 21 und der UV-Prägelackschicht 20 als eine oberste Schicht.

## Patentansprüche

1. Sicherheitselement-Transfermaterial (1) aufweisend
- einen Sicherheitselement-Schichtverbund, der eine Vielzahl von Schichten aufweist, wozu mindestens eine Klebschicht (9), eine Merkmalsschicht (6; 7) und eine Blickschicht (5) gehören, wobei die Blickschicht die Schicht ist, die nach der Übertragung eines Sicherheitselements (34) auf einen Wertgegenstand (33) einem Betrachter zugewandt ist, und
- einen temporären Träger, der mit der Blickschicht (5) des Sicherheitselement-Schichtverbunds abtrennbar verbunden ist, wobei
- der temporäre Träger mindestens ein erstes temporäres Trägersubstrat (4), nämlich eine Kunststofffolie, aufweist, **dadurch gekennzeichnet, dass**
- die Blickschicht (5) des Sicherheitselement-Schichtverbunds in Form einer auf dem ersten temporären Trägersubstrat (4) durch Coextrudieren erzeugten Kunststoffschicht mit geringfügigem Haftungsvermögen auf dem ersten temporären Trägersubstrat (4) vorliegt.

2. Sicherheitselement-Transfermaterial (1) nach Anspruch 1, **dadurch gekennzeichnet, dass** das erste temporäre Trägersubstrat (4) eine Polyethylenterephthalat(PET)-Folie ist und die Blickschicht (5) des Sicherheitselement-Schichtverbunds, die in Form einer auf dem ersten temporären Trägersubstrat (4) durch Coextrudieren erzeugten Kunststoffschicht mit geringfügigem Haftungsvermögen auf dem ersten temporären Trägersub-strat (4) vorliegt, eine Polyethylennaphthalat(PEN)-Schicht ist.

3. Sicherheitselement-Transfermaterial (1) nach Anspruch 1 oder 2, **dadurch gekennzeichnet, dass** der temporäre Träger einen Trägerschichtverbund aufweist, der aus einem ersten (4) und einem zweiten (2) temporären Trägersubstrat, die jeweils eine Kunststofffolie sind und mittels einer Klebstoffschicht (3) unlösbar verklebt sind, besteht.

4. Sicherheitselement-Transfermaterial (1) nach einem der Ansprüche 1 bis 3, **dadurch gekennzeichnet, dass** Umrissformen der Sicherheitselemente in dem Sicherheitselement-Schichtverbund vorgeschnitten sind.

5. Sicherheitselement-Transfermaterial (1) nach Anspruch 4 mit Rückbezug auf Anspruch 3, **dadurch gekennzeichnet, dass** Umrissformen der Sicherheitselemente in dem Sicherheitselement-Schichtverbund vorgeschnitten sind, wobei die Schnitte (11) gegebenenfalls das erste temporäre Trägersubstrat (4) teilweise oder vollständig durchtrennen und gegebenen-falls die Klebstoffschicht (3) teilweise oder vollständig durchtrennen, in das zweite temporäre Trägersubstrat (2) aber nicht eindringen, sodass der temporäre Träger als vollständiger Trägerschichtverbund abgetrennt werden kann.

6. Sicherheitselement-Transfermaterial (1) nach Anspruch 4 oder 5, **dadurch gekennzeichnet, dass** aus dem Sicherheitselement-Schichtverbund das Schichtverbundmaterial außerhalb der Umrissformen der Sicherheitselemente entfernt ist, sodass das Sicherheitselement-Transfermaterial Lücken in dem Sicherheitselement-Schichtverbund aufweist, während der temporäre Träger keine Lücken aufweist.

7. Sicherheitselement-Transfermaterial (1) nach einem der Ansprüche 1 bis 4, **dadurch gekennzeichnet, dass** die Merkmalsschicht eine Prägelackschicht (6) und eine Metallisierung oder ein farbiges Dünnschichtelement (7) aufweist.

8. Sicherheitselement-Transfermaterial (17) aufweisend
- einen Sicherheitselement-Schichtverbund, der eine Vielzahl von Schichten aufweist, wozu mindestens eine Klebschicht (25), eine Merkmalsschicht (20; 21) und ein permanentes Trägersubstrat (24) gehören, wobei die Merkmalsschicht (20; 21) mit einer Blickschicht identisch ist und die Blickschicht die Schicht ist, die nach der Übertragung eines Sicherheitselements (35) auf einen Wertgegenstand (33) einem Betrachter zugewandt ist, und
- einen temporären Träger, der mit der Blickschicht des Sicherheitselement-Schichtverbunds abtrennbar verbunden ist,
wobei
- der temporäre Träger ein Trägersubstrat (18), nämlich eine Kunststofffolie, und eine durch Coextrudieren auf dem Trägersubstrat (18) erzeugte Kunststoffschicht (19) mit hohem Haftungsvermögen auf dem Trägersubstrat (18) aufweist; und
- die Blickschicht des Sicherheitselement-Schichtverbunds mit der durch Coextrudieren auf dem Trägersubstrat (18) erzeugten Kunststoffschicht (19) abtrennbar verbunden ist.

9. Sicherheitselement-Transfermaterial (17) nach Anspruch 8, **dadurch gekennzeichnet, dass** das Trägersubstrat (18) des temporären Trägers ei-ne Polyethylenterephthalat(PET)-Folie ist und die durch Coextrudieren auf dem Trägersubstrat (18) erzeugte Kunststoffschicht (19) mit hohem Haftungsvermögen auf dem Trägersubstrat (18) eine Polyethylennaphthalat(PEN)-Schicht mit beigemischtem Polyethylenterephthalat(PET) ist.

10. Sicherheitselement-Transfermaterial (17) nach einem der Ansprüche 8 oder 9, **dadurch gekennzeichnet, dass** Umrissformen der Sicherheitselemente in dem Sicherheitselement-Schichtverbund vorgeschnitten sind.

11. Sicherheitselement-Transfermaterial (17) nach einem der Ansprüche 8 oder 9, **dadurch gekennzeichnet, dass** Umrissformen der Sicherheitselemente in dem Sicherheitselement-Schichtverbund vorgeschnitten sind, wobei die Schnitte gegebenenfalls die durch Coextrudieren auf dem Trägersubstrat (18) erzeugte Kunststoffschicht (19) mit hohem Haftungsvermögen auf dem Trägersubstrat (18) teilweise oder vollständig durchtrennen, in das ein Trägersubstrat (18) des temporären Trägers aber nicht eindringen, sodass der temporäre Träger als vollständiger Trägerschichtverbund abgetrennt werden kann.

12. Sicherheitselement-Transfermaterial (1) nach einem der Ansprüche 8 bis 11, **dadurch gekennzeichnet, dass** die Merkmalsschicht eine Prägelackschicht (20) und eine Metallisierung oder ein farbiges Dünnschichtelement (21) aufweist.

13. Sicherheitselement-Transfermaterial (1, 17) nach einem der Ansprüche 7 oder 12, **dadurch gekennzeichnet, dass** das farbige Dünnschichtelement (7, 21) ein farbkippendes Dünnschichtelement, das dem Betrachter bei unterschiedlichen Betrachtungswinkeln unterschiedliche Farbeindrücke vermittelt, oder ein semitransparentes Dünnschichtelement, das dem Betrachter bei der Betrachtung im Auflicht und bei der Betrachtung im Durchlicht unterschiedliche Farbeindrücke vermittelt, ist.

14. Verwendung eines Sicherheitselement-Transfermaterials (1, 17) nach einem der Ansprüche 1 bis 13 zur Absicherung eines Wertgegenstandes, insbesondere eines Wertdokuments (33), mit einem Sicherheitselement (34, 35).

15. Verwendung nach Anspruch 14 mit Rückbezug auf einen der Ansprüche 8 bis 13, **dadurch gekennzeichnet, dass** der Wertgegenstand ein eine durchgehende Öffnung (37) aufweisendes Wertdokument (33) ist und das Sicherheitselement (35) so aufgebracht ist, dass es die durchgehende Öffnung (37) abdeckt.

16. Verfahren zum Herstellen eines Sicherheitselement-Transfermaterials (1) nach einem der Ansprüche 1 bis 7, aufweisend
- das Bereitstellen eines Trägersubstrats (4), nämlich eine Kunststofffolie, das mit einer durch Coextrudieren erzeugten Kunststoffschicht (5) versehen ist, wobei die auf dem Trägersubstrat (4) durch Coextrudieren erzeugte Kunststoffschicht (5) ein geringfügiges Haftungsvermögen auf dem Trägersubstrat (4) aufweist; und
- das Anordnen eines mindestens eine Klebschicht (9) und eine Merkmalsschicht (6; 7) aufweisenden Sicherheitselement-Schichtverbunds auf der durch Coextrudieren erzeugten Kunststoffschicht.

17. Verfahren zum Herstellen eines Sicherheitselement-Transfermaterials (17) nach einem der Ansprüche 8 bis 12, aufweisend
- das Bereitstellen eines Trägersubstrats (18), nämlich eine Kunststofffolie, das mit einer durch Coextrudieren erzeugten Kunststoffschicht (19) versehen ist, wobei die auf dem Trägersubstrat (18) durch Coextrudieren erzeugte Kunststoffschicht (19) ein hohes Haftungsvermögen auf dem Trägersubstrat (18) aufweist; und
- das Anordnen eines mindestens eine Klebschicht (25) und eine Merkmalsschicht aufweisenden Sicherheitselement-Schichtverbunds auf der durch Coextrudieren erzeugten Kunststoffschicht.

## Claims

1. Security element transfer material (1) comprising
- a security element laminate comprising a multiplicity of layers, including at least an adhesive layer (9), a feature layer (6; 7) and a viewing layer (5), the viewing layer being the layer which, after transfer of a security element (34) to a value article (33), faces a viewer, and
- a temporary carrier which is removably connected to the viewing layer (5) of the security element laminate, wherein
- the temporary carrier comprises at least a first temporary carrier substrate (4), specifically a plastics film,
**characterized in that**
- the viewing layer (5) of the security element laminate is in the form of a plastics layer, generated on the first temporary carrier substrate (4) by coextrusion, with little adhesiveness on the first temporary carrier substrate (4).

2. Security element transfer material (1) according to Claim 1, **characterized in that** the first temporary carrier substrate (4) is a polyethylene terephthalate (PET) film and the viewing layer (5) of the security element laminate, which is in the form of a plastics layer, generated on the first temporary carrier substrate (4) by coextrusion, with little adhesiveness on the first temporary carrier substrate (4), is a polyethylene naphthalate (PEN) layer.

3. Security element transfer material (1) according to Claim 1 or 2, **characterized in that** the temporary carrier comprises a carrier laminate which consists of a first (4) and a second (2) temporary carrier substrate, which are in each case a plastics film and are bonded indissolubly by means of a layer (3) of adhesive.

4. Security element transfer material (1) according to any of Claims 1 to 3, **characterized in that** outline shapes of the security elements are precut in the security element laminate.

5. Security element transfer material (1) according to Claim 4 with reference to Claim 3, **characterized in that** outline shapes of the security elements are precut in the security element laminate, where the cuts (11) optionally sever the first temporary carrier substrate (4) partially or completely and optionally sever the layer (3) of adhesive partially or completely but do not penetrate into the second temporary carrier substrate (2), so that the temporary carrier can be removed as a complete carrier laminate.

6. Security element transfer material (1) according to Claim 4 or 5, **characterized in that** the laminate material outside the outline shapes of the security elements is removed from the security element laminate, so that the security element transfer material has gaps in the security element laminate, while the temporary carrier has no gaps.

7. Security element transfer material (1) according to any of Claims 1 to 4, **characterized in that** the feature layer comprises an embossing varnish layer (6) and a metallization or a coloured thin-layer element (7).

8. Security element transfer material (17) comprising
- a security element laminate which comprises a multiplicity of layers, including at least an adhesive layer (25), a feature layer (20; 21) and a permanent carrier substrate (24), the feature layer (20; 21) being identical to a viewing layer and the viewing layer being the layer which, after transfer of a security element (35) to a value article (33), faces a viewer, and
- a temporary carrier which is removably connected to the viewing layer of the security element laminate,
wherein
- the temporary carrier comprises a carrier substrate (18), specifically a plastics film, and a plastics layer (19), generated on the carrier substrate (18) by coextrusion, with high adhesiveness on the carrier substrate (18); and
- the viewing layer of the security element laminate is removably connected to the plastics layer (19) generated on the carrier substrate (18) by coextrusion.

9. Security element transfer material (17) according to Claim 8, **characterized in that** the carrier substrate (18) of the temporary carrier is a polyethylene terephthalate (PET) film and the plastics layer (19), generated on the carrier substrate (18) by coextrusion, with high adhesiveness on the carrier substrate (18), is a polyethylene naphthalate (PEN) layer with admixed polyethylene terephthalate (PET).

10. Security element transfer material (17) according to either of Claims 8 and 9, **characterized in that** outline shapes of the security elements are precut in the security element laminate.

11. Security element transfer material (17) according to either of Claims 8 and 9, **characterized in that** outline shapes of the security elements are precut in the security element laminate, where the cuts optionally sever the plastics layer (19), generated on the carrier substrate (18) by coextrusion, with high adhesiveness on the carrier substrate (18), partially or completely but do not penetrate into the carrier substrate (18) of the temporary carrier, so that the temporary carrier can be removed as a complete carrier laminate.

12. Security element transfer material (1) according to any of Claims 8 to 11, **characterized in that** the feature layer comprises an embossing varnish layer (20) and a metallization or a coloured thin-layer element (21).

13. Security element transfer material (1, 17) according to either of Claims 7 and 12, **characterized in that** the coloured thin-layer element (7, 21) is a colour-flopping thin-layer element which conveys different colours to the viewer at different viewing angles, or a semi-transparent thin-layer element which conveys different colours to the viewer when viewed in reflected light and when viewed in transmitted light.

14. Use of a security element transfer material (1, 17) according to any of Claims 1 to 13 to safeguard a value article, more particularly a value document (33), with a security element (34, 35).

15. Use according to Claim 14 with reference to any of Claims 8 to 13, **characterized in that** the value article is a value document (33) having a through-opening (37) and the security element (35) is applied such that it masks the through-opening (37).

16. Method for producing a security element transfer material (1) according to any of Claims 1 to 7, comprising
- providing a carrier substrate (4), specifically a plastics film provided with a plastics layer (5) generated by coextrusion, where the plastics layer (5), generated on the carrier substrate (4) by coextrusion, has little adhesiveness on the carrier substrate (4); and
- arranging a security element laminate comprising at least an adhesive layer (9) and a feature layer (6; 7) on the plastics layer generated by coextrusion.

17. Method for producing a security element transfer material (17) according to any of Claims 8 to 12, comprising
- providing a carrier substrate (18), specifically a plastics film provided with a plastics layer (19) generated by coextrusion, where the plastics layer (19), generated on the carrier substrate (18) by coextrusion, has high adhesiveness on the carrier substrate (18); and
- arranging a security element laminate comprising at least an adhesive layer (25) and a feature layer on the plastics layer generated by coextrusion.

## Revendications

1. Matériau de transfert d'élément de sécurité (1) présentant
- un composite de couches d'élément de sécurité présentant une pluralité de couches, dont au moins une couche adhésive (9), une couche de caractéristique (6 ; 7) et une couche visible (5), la couche visible étant la couche qui fait face à un observateur après le transfert d'un élément de sécurité (34) sur un objet de valeur (33), et
- un support temporaire qui est relié de manière détachable à la couche visible (5) du composite de couches d'élément de sécurité,
- le support temporaire présentant au moins un premier substrat de support temporaire (4), à savoir un film de matière plastique,
**caractérisé en ce que**
- la couche visible (5) du composite de couches d'élément de sécurité se présente sous la forme d'une couche de matière plastique produite par coextrusion sur le premier substrat de support temporaire (4), ayant un pouvoir adhésif faible sur le premier substrat de support temporaire (4).

2. Matériau de transfert d'élément de sécurité (1) selon la revendication 1, **caractérisé en ce que** le premier substrat de support temporaire (4) est un film de polyéthylène téréphtalate (PET) et la couche visible (5) du composite de couches d'élément de sécurité, qui se présente sous la forme d'une couche de matière plastique produite par coextrusion sur le premier substrat de support temporaire (4), ayant un pouvoir adhésif faible sur le premier substrat de support temporaire (4), est une couche de polyéthylène naphtalate (PEN) .

3. Matériau de transfert d'élément de sécurité (1) selon la revendication 1 ou 2, **caractérisé en ce que** le support temporaire présente un composite de couches de support constitué d'un premier (4) et d'un deuxième (2) substrat de support temporaire, chacun étant un film de matière plastique et étant collé de manière inamovible au moyen d'une couche d'adhésif (3).

4. Matériau de transfert d'élément de sécurité (1) selon l'une quelconque des revendications 1 à 3, **caractérisé en ce que** des formes de contour des éléments de sécurité sont prédécoupées dans le composite de couches d'élément de sécurité.

5. Matériau de transfert d'élément de sécurité (1) selon la revendication 4, en référence à la revendication 3, **caractérisé en ce que** des formes de contour des éléments de sécurité sont prédécoupées dans le composite de couches d'élément de sécurité, les découpes (11) coupant éventuellement partiellement ou complètement le premier substrat de support temporaire (4) et coupant éventuellement partiellement ou complètement la couche adhésive (3), mais ne pénétrant pas dans le deuxième substrat de support temporaire (2), de telle sorte que le support temporaire peut être détaché en tant que composite de couches de support complet.

6. Matériau de transfert d'élément de sécurité (1) selon la revendication 4 ou 5, **caractérisé en ce que** le matériau composite de couches est retiré du composite de couches d'élément de sécurité en dehors des formes de contour des éléments de sécurité, de telle sorte que le matériau de transfert d'élément de sécurité présente des lacunes dans le composite de couches d'élément de sécurité, tandis que le support temporaire ne présente pas de lacunes.

7. Matériau de transfert d'élément de sécurité (1) selon l'une quelconque des revendications 1 à 4, **caractérisé en ce que** la couche de caractéristique présente une couche de vernis gaufré (6) et une métallisation ou un élément en couche mince coloré (7).

8. Matériau de transfert d'élément de sécurité (17) présentant
- un composite de couches d'élément de sécurité présentant une pluralité de couches dont au moins une couche adhésive (25), une couche de caractéristique (20 ; 21) et un substrat de support permanent (24), la couche de caractéristique (20 ; 21) étant identique à une couche visible, et la couche visible étant la couche qui fait face à un observateur après le transfert d'un élément de sécurité (35) sur un objet de valeur (33), et
- un support temporaire relié de manière détachable à la couche visible du composite de couches d'élément de sécurité,
- le support temporaire présentant un substrat de support (18), à savoir un film de matière plastique, et une couche de matière plastique (19) produite par coextrusion sur le substrat de support (18), ayant un pouvoir adhésif élevé sur le substrat de support (18) ; et
- la couche visible du composite de couches d'élément de sécurité étant reliée de manière détachable à la couche de matière plastique (19) produite par coextrusion sur le substrat de support (18).

9. Matériau de transfert d'élément de sécurité (17) selon la revendication 8, **caractérisé en ce que** le substrat de support (18) du support temporaire est un film de polyéthylène téréphtalate (PET) et la couche de matière plastique produite par coextrusion sur le substrat de support (18), ayant un pouvoir adhésif élevé (19) sur le substrat de support (18), est une couche de polyéthylène naphtalate (PEN) avec du polyéthylène téréphtalate (PET) mélangé.

10. Matériau de transfert d'élément de sécurité (17) selon l'une quelconque des revendications 8 ou 9, **caractérisé en ce que** des formes de contour des éléments de sécurité sont prédécoupées dans le composite de couches d'élément de sécurité.

11. Matériau de transfert d'élément de sécurité (17) selon l'une quelconque des revendications 8 ou 9, **caractérisé en ce que** des formes de contour des éléments de sécurité sont prédécoupées dans le composite de couches d'élément de sécurité, les découpes coupant éventuellement partiellement ou complètement la couche de matière plastique (19) produite par coextrusion sur le substrat de support (18), ayant un pouvoir adhésif élevé sur le substrat de support (18), mais ne pénétrant pas dans un substrat de support (18) du support temporaire, de telle sorte que le support temporaire peut être séparé sous forme de composite de couches de support complet.

12. Matériau de transfert d'élément de sécurité (1) selon l'une quelconque des revendications 8 à 11, **caractérisé en ce que** la couche de caractéristique présente une couche de vernis gaufré (20) et une métallisation ou un élément en couche mince coloré (21).

13. Matériau de transfert d'élément de sécurité (1, 17) selon l'une quelconque des revendications 7 ou 12, **caractérisé en ce que** l'élément en couche mince coloré (7, 21) est un élément en couche mince à basculement de couleur, qui donne à l'observateur des impressions de couleur différentes sous différents angles d'observation, ou un élément en couche mince semi-transparent, qui donne à l'observateur des impressions de couleur différentes lorsqu'il est observé en lumière incidente et lorsqu'il est observé en lumière transmise.

14. Utilisation d'un matériau de transfert d'élément de sécurité (1, 17) selon l'une quelconque des revendications 1 à 13 pour sécuriser un objet de valeur, notamment un document de valeur (33), avec un élément de sécurité (34, 35).

15. Utilisation selon la revendication 14 en référence à l'une quelconque des revendications 8 à 13, **caractérisée en ce que** l'objet de valeur est un document de valeur (33) présentant une ouverture traversante (37) et l'élément de sécurité (35) est appliqué de manière à recouvrir l'ouverture traversante (37).

16. Procédé de fabrication d'un matériau de transfert d'élément de sécurité (1) selon l'une quelconque des revendications 1 à 7, présentant
- la fourniture d'un substrat de support (4), à savoir d'un film de matière plastique, pourvu d'une couche de matière plastique (5) produite par coextrusion, la couche de matière plastique (5) produite par coextrusion sur le substrat de support (4) présentant un pouvoir adhésif faible sur le substrat de support (4) ; et
- l'agencement d'un composite de couches d'élément de sécurité présentant au moins une couche adhésive (9) et une couche de caractéristique (6 ; 7) sur la couche de matière plastique produite par coextrusion.

17. Procédé de fabrication d'un matériau de transfert d'élément de sécurité (17) selon l'une quelconque des revendications 8 à 12, présentant
- la fourniture d'un substrat de support (18), à savoir d'un film de matière plastique, qui est pourvu d'une couche de matière plastique (19) produite par coextrusion, la couche de matière plastique (19) produite par coextrusion sur le substrat de support (18) présentant un pouvoir adhésif élevé sur le substrat de support (18) ; et
- l'agencement sur la couche de matière plastique produite par coextrusion d'un composite de couches d'élément de sécurité présentant au moins une couche adhésive (25) et une couche de caractéristique.
